# FASCICULE DE BREVET EUROPEEN

(11) **EP 2 903 943 B1**
(45) Date de publication et mention de la délivrance du brevet: **11.12.2019**
(21) Numéro de dépôt: 13782785.3
(22) Date de dépôt: 02.10.2013
(51) Int. Cl.: C03B 35/18, C03B 23/033, C03B 40/00, C03B 35/16, C03B 27/04

(54) **BOMBAGE DE FEUILLES DE VERRE AU DEFILE SUR UN LIT DE ROULEAUX**
BIEGUNG VON GLASSCHEIBEN AUF EINEM WALZENBETT
BENDING OF SHEETS OF GLASS RUNNING ON A BED OF ROLLS

(30) Priorité: 03.10.2012 FR 1259368
(43) Date de publication de la demande: 12.08.2015
(73) Titulaire: Saint-Gobain Glass France, 92400 Courbevoie (FR)
(72) Inventeur: THUILLIER, Sébastien, F-60200 Compiegne (FR); FAHL, Fouad, F-60200 Compiegne (FR)
(74) Mandataire: Saint-Gobain Recherche
(86) Numéro de dépôt international: PCT/FR2013/052348
(87) Numéro de publication internationale: WO 2014/053776

(56) Documents cités:
- EP-A1- 0 522 963
- WO-A1-2007/064520
- DE-A1- 3 310 357
- FR-A1- 2 862 056
- JP-A- 2004 277 828
- US-A- 4 540 426

## Description

L'invention concerne le bombage de feuilles de verre défilant sur un lit de rouleaux.

Plus particulièrement, l'invention concerne une technique selon laquelle les feuilles de verres sont amenées à défiler sur au moins un lit de conformation comprenant des rouleaux conformateurs disposés selon un trajet à profil courbe dans la direction du défilement des feuilles de verre.

L'invention s'applique par exemple à la réalisation de vitrages automobiles, par exemple du type vitres latérales de véhicule automobile.

De telles techniques de bombage sont habituellement mises en oeuvre avec des cadences de production très grandes dues notamment à la possibilité de faire suivre des feuilles de verre espacées les unes des autres de quelques centimètres seulement. Elles permettent une bonne reproductibilité du galbe et de la qualité optique des vitrages finals.

Des procédés et machines de bombage de ce type sont décrits par exemple dans les US4540425, US4540426, US6598427, US7665331. De façon connue, les feuilles de verre sont amenées à leur température de ramollissement dans un four, puis elles sortent du four pour défiler de manière ascendante ou descendante dans un lit de conformation qui a un profil courbe, par exemple en portion de cercle, dans lequel elles entrent horizontalement de façon tangentielle et qui donne la courbure souhaitée aux feuilles de verre. Ce type de bombage donne aux feuilles une courbure dans leur sens de défilement.

Une fois les feuilles mises en forme, elles sont trempées ou refroidies pour être durcies, puis, généralement, un dispositif basculant permet de les replacer horizontalement en sortie de lit de conformation sur un convoyeur les entraînant vers une seconde zone de refroidissement puis vers la zone de sortie.

Le procédé le plus simple connu de ce type utilise des rouleaux rectilignes et parfaitement cylindriques alignés selon une portion de cercle montante dans le sens de défilement des feuilles. Ce procédé donne une courbure cylindrique dans le sens de défilement mais aucune courbure dans le sens transversal au sens de défilement. Afin de bomber les feuilles de verre simultanément selon deux directions orthogonales entre elles (sens de défilement et orthogonalement au sens de défilement), différents types de rouleaux ont été proposés. Le US4139359 enseigne des rouleaux et contre-rouleaux en forme de diabolo-tonneau. L'inconvénient de ce type de rouleau est que les vitesses tangentielles à leur surface varient beaucoup en fonction de la position transversale (c'est-à-dire sur la longueur du rouleau) en conséquence de la variation du diamètre du rouleau. Le verre subit donc inévitablement un frottement à sa surface, susceptible de le marquer. Les US5069705 et US5094679 enseignent des lits de conformation utilisant des rouleaux cylindriques mais cintrés de façon forcée dans le domaine élastique au moment du montage du rouleau dans le dispositif de bombage. Le cintrage forcé produit une courbure transversale au sens de défilement mais l'on ne peut pas modifier sa forme qui est proche du cercle et dont on peut juste modifier le rayon. Le DE3310357A1 enseigne un rouleau comprenant une âme recouverte d'une gaine tournante comprenant une enveloppe en métal comprenant des corrugations. Ces corrugations donnent une bonne stabilité à la dimension du diamètre de l'enveloppe mais n'offrent pas une surface lisse et sont donc susceptible d'engendrer un marquage au verre, même si une chaussette extérieur les recouvrent. Le US2007084245 (ou WO2005047198) enseigne un lit de conformation de feuilles de verre, ledit lit comprenant des rouleaux permettant l'avancement desdites feuilles et disposés selon un trajet à profil en arc de cercle, les feuilles prenant progressivement leur forme en entrant dans le lit sur une première zone dite de mise en forme, puis étant durcies par trempe ou refroidissement dans une seconde zone du lit jusqu'à leur sortie, des feuilles de verre bombées étant ainsi obtenues. DE 33 10 357 enseigne un rouleau avec deux enveloppes pour l'entraînement de feuilles de verre.

De façon à produire une courbure transversalement par rapport au sens de défilement, on a maintenant réalisé des rouleaux dont la section est constante sur sa longueur (donc transversalement au sens de défilement) mais pouvant avoir une forme quelconque sur cette longueur. Le rouleau comprend une tige métallique fixe préformée (c'est-à-dire ayant reçu sa forme définitive correspondant à la forme de bombage souhaitée avant montage sur le dispositif de bombage) et une gaine flexible entourant ladite tige et pouvant tourner autour de la tige. La gaine est entrainée en rotation autour de la tige fixe et entraîne ainsi les feuilles de verre. Le rouleau peut ainsi avoir presque n'importe quelle forme et pas nécessairement la forme d'un arc de cercle. La forme du rouleau lui est donnée avant montage sur le dispositif de bombage par la forme donnée à la tige précintrée et il n'y a pas lieu de le déformer par cintrage forcé lors dudit montage.

L'invention concerne un dispositif de bombage de feuilles de verre en défilement entre un lit de rouleaux supérieurs et un lit de rouleaux inférieurs constituant un lit conformateur pinçant les feuilles lors de leur défilement, ledit lit conformateur étant disposé selon un trajet à profil courbe dans la direction du défilement des feuilles de verre, ledit lit conformateur comprenant au moins un rouleau (dit du type tige/gaine) comprenant une tige métallique fixe préformée selon un profil courbe dans sa longueur et une gaine flexible pouvant tourner autour de ladite tige, ladite gaine étant entraînée en rotation autour de ladite tige.

Par simplification, on peut appeler ce type de rouleau dans la présente demande « rouleau tige/gaine ». Généralement, deux rouleaux du type tige/gaine (dits « paire de rouleaux ») pincent ensemble par une action conjuguée la feuille de verre passant entre eux. Généralement, la gaine d'un rouleau tige/gaine est entraînée en rotation par l'un des côtés du rouleau et la tige est maintenue fixe par l'autre côté du rouleau.

Le lit de conformation du dispositif selon l'invention confère simultanément deux courbures orthogonales entre elles (dans le sens de défilement et orthogonalement au sens de défilement) aux feuilles en défilement. La distance entre un rouleau du lit supérieur et un rouleau du lit inférieur (ces deux rouleaux formant une paire de rouleaux) correspond à l'épaisseur de la feuille de verre. Le passage de la feuille entre la paire de rouleau modifie la courbure de la feuille selon ces deux directions orthogonales entre elles. Pour modifier la courbure des feuilles de verre dans le sens de défilement, il convient de placer de façon juxtaposée au moins trois paires de rouleaux dont le décalage exerce une déformation sur la feuille passant entre eux. Bien entendu, le dispositif de bombage selon l'invention peut également comprendre des paires de rouleaux du type tige/gaine ne modifiant pas les courbures de la feuille, puisque lorsque celle-ci est figée dans sa forme par refroidissement, il n'y a plus lieu de continuer son bombage et il convient seulement de continuer à la convoyer. Ces rouleaux essentiellement convoyeurs et non formeurs sont situées après la zone de conformation, dans la zone de refroidissement, notamment de trempe.

Le dispositif selon l'invention comprend un lit de conformation de feuilles de verre comprenant au moins un rouleau du type tige/gaine. Le lit de conformation comprend un lit supérieur et un lit inférieur. Plusieurs rouleaux du type tige/gaine peuvent équiper les deux lits de rouleaux (lit supérieur et lit inférieur) entre lesquelles les feuilles de verre défilent. Les feuilles sont pincées entre les deux lits de rouleaux dont la distance entre les surfaces de contact correspond à l'épaisseur de la feuille de verre. Les lits peuvent avoir un profil courbe ascendant ou descendant dans le sens de défilement de façon à conférer aux feuilles une courbure dans le sens de défilement. Les courbures transversalement au sens de défilement sont conférées aux feuilles grâce au cintrage fixe préalablement donné à la tige du rouleau tige/gaine. Les courbures dans le sens de défilement ou transversalement par rapport au sens de défilement peuvent être évolutives au cours du défilement. On peut ainsi progressivement augmenter les courbures dans un sens ou dans l'autre en jouant sur la variation du rayon de courbure du lit de conformation au cours du défilement ou en intensifiant les courbures des rouleaux entre le début et la fin de la zone de conformation. Le lit de conformation peut comprendre des paires de rouleaux, chaque paire comprenant un rouleau supérieur (au-dessus des feuilles) et un rouleau inférieur (en-dessous des feuilles), placés suffisamment proches l'un de l'autre (pouvant notamment être en vis-à-vis) et de chaque côté des feuilles pour les pincer lors de leur défilement. Ainsi, les deux rouleaux d'une même paire peuvent notamment être alignés de part et d'autre de la feuille défilant entre eux.

Pour que le bombage soit précis, il est préférable de réduire le diamètre des rouleaux. Ceux-ci présentent de préférence un diamètre compris entre 25 et 70 mm, notamment entre 25 et 55 mm. En zone de formage, les rouleaux du lit supérieur d'une part et les rouleaux du lit inférieur d'autre part sont de préférence très proches les uns des autres, de sorte qu'il peut y avoir une distance entre deux rouleaux (espace libre entre deux rouleaux voisins du lit supérieur ou du lit inférieur) comprise de préférence entre 20 et 140 mm. En zone de refroidissement, il peut être nécessaire de placer des buses soufflant de l'air froid (ce qui recouvre la température ambiante) entre les rouleaux. Dans ce cas la distance entre rouleaux peut aller de préférence de 30 à 150 mm.

Dans sa longueur, un rouleau tige/gaine décrit un profil dont la courbure peut changer de signe plusieurs fois. Un tel rouleau peut présenter des rayons de courbure différents sur sa longueur.

Les profils courbes des rouleaux inférieurs et supérieurs d'une paire de rouleaux placés en vis-à-vis de part et d'autre des feuilles en défilement peuvent être différents, notamment si c'est nécessaire pour assurer une distance constante entre eux et égale à la feuille de verre.

En zone de formage, une suite de trois paires de rouleaux juxtaposés, de préférence tous du type tige/gaine, peuvent être disposés de façon à pouvoir effectivement bomber la feuille en défilement. Il convient pour cela que les axes des trois rouleaux situés d'un même côté des feuilles en défilement ne soient pas alignés si on les regarde selon un plan de coupe longitudinal (vue transversale) parallèle à la direction de défilement et imposent une courbure plus forte aux feuilles que celle qu'elles ont déjà (ce qui inclut la possibilité qu'elles arrivent planes avant les trois rouleaux). C'est ce non-alignement qui permet de modifier la forme de la feuille en défilement. Ce non-alignement existe d'une part pour les trois rouleaux inférieurs des paires de rouleaux juxtaposés et d'autre part pour les trois rouleaux supérieurs des paires de rouleaux juxtaposés. Ainsi, le dispositif selon l'invention peut comprendre trois paires juxtaposées de rouleaux, les axes des trois rouleaux supérieurs des trois paires n'étant pas alignés, et les axes des trois rouleaux inférieurs des trois paires n'étant pas alignés, de sorte que les feuilles sont déformées par leur passage entre les trois paires de rouleaux.

Le rouleau tige/gaine peut aussi équiper des zones du dispositif de bombage/trempe ne modifiant pas la forme de la feuille de verre dès lors qu'il est dans une zone où sa fonction est limitée à entraîner la feuille de verre, comme par exemple en zone de refroidissement.

L'invention concerne également un rouleau tige/gaine particulier spécialement conçu pour être utilisé dans le dispositif selon l'invention. Le rouleau selon l'invention sert à l'entraînement et le cas échéant le bombage de feuilles de verre. Il comprend une tige métallique préformée selon un profil courbe dans sa longueur et une gaine flexible pouvant tourner autour de la tige, ladite gaine comprenant une première enveloppe en un matériau polymère et une deuxième enveloppe en un matériau métallique flexible disposée autour de l'enveloppe en matériau polymère. La tige peut être en acier, notamment en acier 304 ou 316 ou tout acier résistant aux températures auxquelles il est soumis. La tige est préformée de sorte qu'elle conserve sa forme même lorsqu'elle n'est soumise à aucune contrainte, notamment à l'état non-montée sur le dispositif de bombage. Le rouleau a donc la même forme monté ou non monté sur le dispositif de bombage. Même si le rouleau n'est pas mis dans un four, il a vocation à convoyer des feuilles de verre portées à leur température de bombage, c'est-à-dire entre 600 et 700°C. La gaine est avantageusement un assemblage d'une première enveloppe tubulaire interne en un matériau polymère et d'une seconde enveloppe tubulaire métallique flexible (tissée ou tressée), la seconde enveloppe entourant la première. La seconde enveloppe est en contact avec la première enveloppe. La seconde enveloppe est rendue solidaire de la première par collage ou simplement en la faisant serrer suffisamment à la première enveloppe. Le diamètre interne de la seconde enveloppe est sensiblement égal au diamètre externe de la première enveloppe. La seconde enveloppe est ainsi généralement montée sans jeu autour de la première enveloppe. En général, la seconde enveloppe n'est pas totalement solidaire de la première enveloppe, de sorte qu'on peut théoriquement la faire tourner autour de la première enveloppe moyennant une force suffisante, ce qui occasionne un frottement significatif entre les deux enveloppes. Cette possibilité de rotation de la deuxième enveloppe par rapport à la première enveloppe n'est pas recherchée dans le cadre de la présente invention. En effet, il convient que la première et la deuxième enveloppe soient suffisamment solidaires (et donc cohésives) pour qu'elles tournent ensemble dans la présente application, l'interface entre les deux enveloppes étant alors non-glissant. Ceci signifie en particulier que la gaine entière est entraînée en rotation même si l'on agit pour faire tourner autour de la tige une seule des deux enveloppes, notamment en une de ses extrémités et sans action particulière sur l'autre enveloppe. Ce type de gaine est par exemple utilisé comme flexible pour équiper les installations sanitaires et placée entre la tuyauterie d'arrivée d'eau et la robinetterie. Dans l'application selon l'invention, c'est-à-dire en tant que rouleau de convoyage et/ou de bombage de feuilles de verre, les deux enveloppes ont un comportement solidaire et elles tournent ensemble et de façon solidaire autour de la tige fixe préformée. Elles sont solidaires du fait de leur cohésion, laquelle leur fait faire corps ensemble. On fait tourner les deux enveloppes autour de la tige par entraînement des enveloppes par un de leur côté (voire les deux côtés). Si les deux enveloppes sont suffisamment solidaires, on peut les faire tourner ensemble autour de la tige en entraînant seulement l'une d'elle, notamment la deuxième enveloppe (métallique), par exemple en la maintenant par pincement entre deux pièces métalliques, uniquement d'un côté du rouleau. Dans ce cas, on peut dire que la première et la deuxième enveloppe sont solidaires en rotation. La tige métallique peut comprendre un canal interne dans sa longueur permettant de faire passer un fluide de refroidissement (air ou eau). Comme cette tige préformée est fixe en utilisation, l'alimentation et l'éjection du fluide de refroidissement de la tige est particulièrement aisée.

La deuxième enveloppe en fibres métalliques présente, du fait de sa structure tissée ou tressée, une surface suffisamment lisse pour éviter de marquer le verre. Cette structure de la gaine métallique nécessite une bonne cohésion avec la première enveloppe, car c'est cette cohésion, due notamment à l'absence de jeu entre elles, qui empêche la déformation de la deuxième enveloppe. En effet, si l'on essaye de mettre en rotation une gaine métallique tissée ou tressée sans première enveloppe cohésive avec elle en-dessous, on s'aperçoit que cette gaine métallique fait des plis et se tord, de sorte qu'elle est totalement inadaptée à offrir une surface uniforme et lisse pour les feuilles de verre. De même, si l'on essaye de mettre en rotation une gaine en polymère sans seconde enveloppe cohésive en métal au-dessus, on s'aperçoit également que cette enveloppe se tord et forme des plis. C'est donc bien l'association cohésive de ces deux matériaux aux élasticités très différentes qui mène à une gaine répondant très bien au cahier des charges nécessaire. Il semble que les fibres métalliques empêchent la torsion de la première enveloppe autour de la tige en métal et que l'enveloppe en polymère empêche la compression de l'enveloppe métallique le long de la tige préformée en métal. Cette gaine associant les deux enveloppes de façon cohésive est suffisamment déformable pour suivre le profil de la tige métallique préformée mais a suffisamment de rigidité pour ne pas se déformer trop fortement en torsion et risquer de former des plis.

Bien entendu, il convient d'utiliser un matériau polymère résistant aux températures subies. Notamment, on peut utiliser comme matériau polymère un polytétrafluoroéthylène (PTFE), notamment disponible sous la marque Téflon. En effet, ce matériau est avantageux car il possède un faible coefficient de frottement, ce qui est favorable à la rotation de la gaine autour de la tige préformée, et il est stable au moins jusqu'à 400°C. On peut également utiliser comme matériau polymère un polyéthylène, lequel possède également un bas coefficient de friction. Il est cependant plus délicat à mettre en œuvre car il est plus sensible à la température. La possibilité d'utiliser un matériau polymère comme élément d'un rouleau devant véhiculer et déformer des feuilles de verre portées à plus de 500°C relève d'une démarche innovante. Cette première enveloppe peut également comprendre deux sous-enveloppes en matériaux différents, notamment une première sous-enveloppe en PTFE sur laquelle se trouve une deuxième sous-enveloppe en polyéthylène.

La deuxième enveloppe est métallique et peut être en fibres réfractaire comme en fibres d'acier inoxydable. On s'est aperçu que cette enveloppe métallique protégeait efficacement de la chaleur l'enveloppe en polymère qu'elle recouvre, sans doute en évacuant rapidement la chaleur tangentiellement au rouleau et dans l'air ambiant et évitant de ce fait des points chaud en surface de l'enveloppe en polymère. De plus, l'enveloppe tressée en métal sert de structure de maintien à la gaine et permet à l'enveloppe en polymère de résister aux mouvements réguliers de compression / extension auxquels elle est soumise du fait de la rotation autour de la tige préformée et de l'action de pincement sur la feuille de verre. L'enveloppe métallique autorise de ce fait des bombages selon de faibles rayons de courbure pouvant descendre jusqu'à 100 mm (rayons de courbure d'au moins 100 mm) grâce au maintien exercé par l'enveloppe métallique sur l'enveloppe polymère. L'enveloppe métallique évite donc le contact direct du matériau polymère avec les feuilles chaudes en défilement et réduit la tendance de celui-ci à se décomposer. La gaine est enfilée autour de la tige cintrée avec le moins de jeu possible mais avec suffisamment de jeu pour lui permettre de tourner autour de la tige. Ce jeu est généralement compris entre 0,4 et 5 mm. De préférence, on place une graisse entre la tige et la gaine (c'est-à-dire entre la tige et la première enveloppe en matériau polymère) pour faciliter le mouvement de rotation de la gaine autour de la tige. Comme graisse, on peut notamment utiliser une graisse comprenant un matériau à faible coefficient de friction comme le graphite, le bisulfure de molybdène (MoS₂) ou le nitrure de bore hexagonal (BN). De préférence, la gaine est entourée d'une chaussette en fibres réfractaires comme en fibre de silice, en fibres d'aramide (notamment en Kevlar comme le matériau commercialisé sous la marque Tuffnit) ou en fibres d'acier inoxydable, de façon à adoucir le contact avec le verre et réduire les risques de marquage du verre. La chaussette est un matériau de fibres tressées ou tricotées ou tissées. La chaussette est solidaire en rotation de la gaine et est fixée à elle par exemple par des bandes adhésives placées près des extrémités du rouleau. Les feuilles de verre circulent et sont conformées par les rouleaux selon l'invention en ne contactant que la chaussette. A titre d'exemple, la tige peut avoir un diamètre de 10 à 40 mm, la première enveloppe en un matériau polymère peut avoir une épaisseur de 1 à 10 mm et la deuxième enveloppe en un matériau métallique flexible peut avoir une épaisseur de 0,5 à 10 mm, généralement 0,5 à 2 mm.

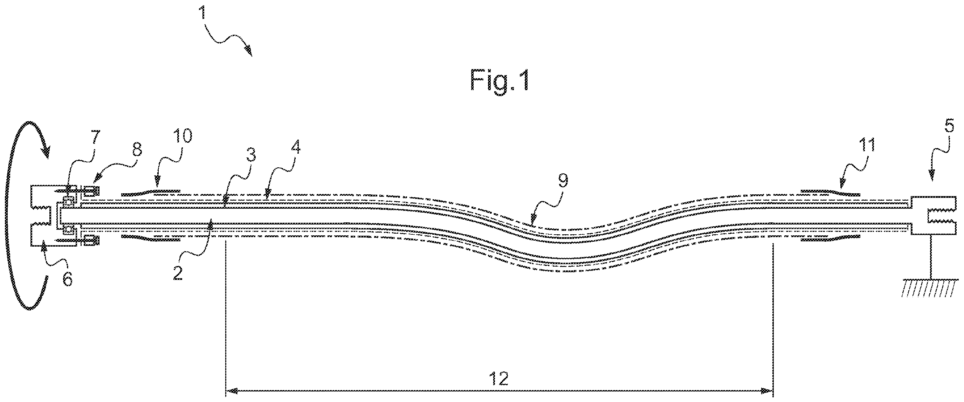

La figure 1 représente un rouleau selon l'invention. Il comprend une tige métallique rigide fixe 2. Autour de la tige est enfilée une gaine flexible comprenant une première enveloppe 3 en un matériau polymère et une seconde enveloppe 4 en tresse métallique (représentée en pointillés rapprochés). Le diamètre intérieur de la gaine en polymère a un diamètre supérieur de 2 mm au diamètre extérieur de la tige. La première et la seconde enveloppe sont solidaires du fait de l'absence de jeu entre elles. La fixité de la tige lui est conférée par son côté droit, ladite fixité étant représentée par le symbole de la terre. La tige comprend en son côté droit (sur la figure) un mandrin 5 muni d'éléments de fixations empêchant la rotation de la tige. La rotation de la gaine (représentée par une flèche) est assurée par le côté gauche (sur la figure) par l'intermédiaire du mandrin 6 pouvant tourner autour de la tige 2 par l'intermédiaire d'un roulement à bille 7. Ce mandrin 6 est muni d'une bride 8 permettant d'enserrer quelques centimètres d'enveloppe métallique 4 que l'on a dégagé de l'enveloppe 3 en matériau polymère. En animant le mandrin 6 d'une rotation, on entraine toute la gaine par l'intermédiaire de l'enveloppe métallique 4 en raison de la solidarité suffisante entre les deux enveloppes formant la gaine. Avantageusement, la tige 2 est graissée avant d'enfiler la gaine autour d'elle. Une « chaussette » 9 entoure la gaine pour adoucir le contact avec les feuilles de verre. Cette chaussette 9 est solidarisée à l'enveloppe métallique grâce à des bandes adhésives 10 et 11. La chaussette 9 est entraînée en rotation par l'enveloppe métallique 4. Les feuilles de verre sont destinées à circuler entre les deux adhésifs 10 et 11 et donc sensiblement dans la zone 12, perpendiculairement à la figure.

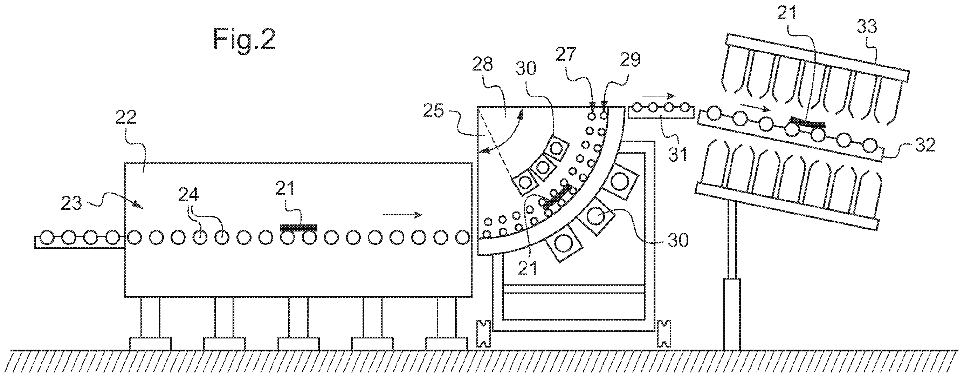

la Figure 2 est une représentation schématique vue de côté d'une machine de bombage/trempe à laquelle s'adresse l'invention, dans laquelle une feuille de verre défile dans un four de réchauffage, puis dans un lit de conformation ascendant, puis, en sortie, dans une zone de refroidissement secondaire. La feuille de verre 21 traverse en premier lieu une zone de réchauffage 22 (four tunnel), dans laquelle elle est véhiculée sur un convoyeur horizontal 23 mue par une série de rouleaux moteurs rectilignes 24 alignés dans un plan. A la sortie de la zone de réchauffage 22 et donc du four de mise en température, la température de la feuille de verre 21 est à une température permettant son bombage. La feuille de verre 21 pénètre alors dans la zone de mise en forme 25 comprenant un lit de conformation dans lequel un lit de rouleaux supérieurs 29 et un lit de rouleaux inférieurs 27 sont montés longitudinalement selon un profil en arc de cercle. Les feuilles de verre défilent et sont pincées entre ces deux lits de rouleaux. Les rouleaux 27 et 29 forment ainsi un lit de conformation ascendant qui achemine la feuille de verre 21 dans le même sens que le convoyeur 23. Les feuilles de verre 21 acquièrent dans la zone de conformation 25 une courbure imposée par les rouleaux selon l'invention. La zone de mise en forme 25 est suivie d'une zone de trempe ou de refroidissement 28 dans laquelle les feuilles de verre 21 sont amenées à durcir. Les organes de trempe ou de refroidissement sont constitués par des caissons de soufflage 30 disposés de part et d'autre des rouleaux 27 et 29 agissant ainsi sur les deux faces de la feuille de verre 21 de telle sorte qu'en passant entre les caissons 30 et suivant la pression de soufflage choisie, la feuille de verre 21 bombée est soit trempée, soit simplement durcie en position bombée. En quittant le lit de conformation, la feuille de verre 2 bombée est pincée par les deux dernières paires de rouleaux 27 et 29 et bascule sur un convoyeur 31, lequel transporte les feuilles de verre dans le même sens que le convoyeur 23 de la zone de réchauffage 22. La feuille de verre 21 est ensuite évacuée par un convoyeur plan 32 qui traverse une zone de refroidissement secondaire 33.

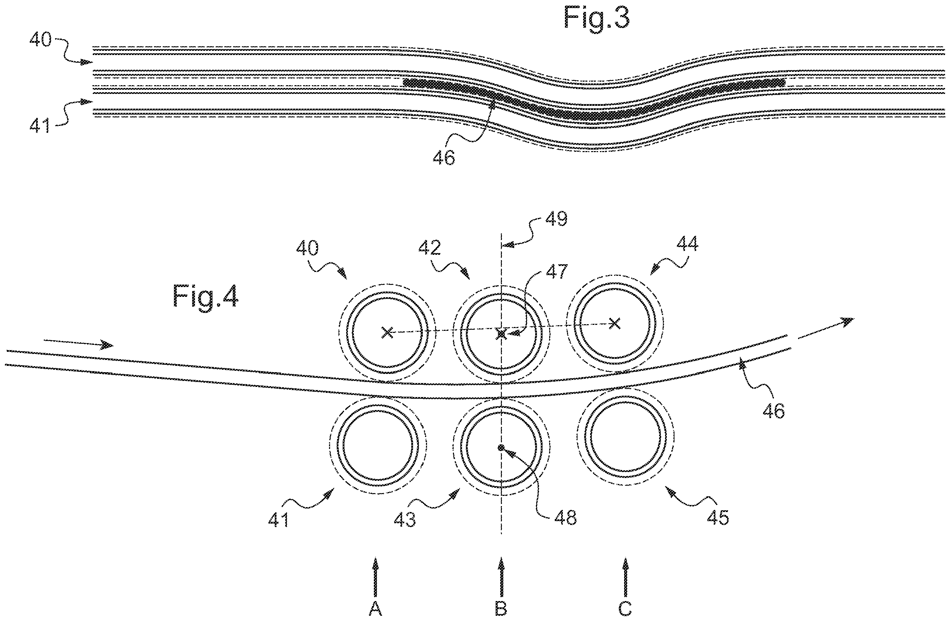

La figure 3 représente une paire de rouleaux 40 et 41 selon l'invention pinçant une feuille de verre 46 passant entre eux. Il s'agit d'une vue dans la direction du sens de défilement permettant d'apprécier la courbure transversale de la feuille de verre.

La figure 4 représente trois paires de rouleaux A (rouleaux 40 et 41), B (rouleaux 42 et 43), C (rouleaux 44 et 45) selon l'invention pinçant une feuille de verre 46 passant entre eux. Il s'agit d'une vue orthogonale à la direction du sens de défilement (représenté par des flèches) permettant d'apprécier la courbure longitudinale de la feuille de verre dans son sens de défilement. Il peut s'agir du bombage de la même feuille que celle vue dans la figure 3. On voit que le plan 49 passant par les axes 47 et 48 des rouleaux 42 et 43 est orthogonal à la feuille de verre, ce qui traduit le fait que les deux rouleaux 42 et 43 sont bien alignés en vis-à-vis l'un de l'autre, de chaque côté de la feuille de verre. Il en est de même pour les paires de rouleaux A d'une part et C d'autre part. Dans une vue en direction transversale permettant d'apprécier un plan de coupe longitudinal, comme c'est le cas de la figure 4, les axes des trois rouleaux supérieurs 40, 42 et 44 d'une part et les axes des trois rouleaux inférieurs 41, 43, 45 d'autre part ne sont pas alignés. C'est ce non-alignement qui impose une courbure longitudinale dans le sens de défilement à la feuille 46 passant entre eux.

## Revendications

1. Rouleau pour l'entrainement de feuilles de verre comprenant une tige métallique préformée selon un profil courbe dans sa longueur et une gaine flexible pouvant tourner autour de la tige, ladite gaine comprenant une première enveloppe en un matériau polymère et une deuxième enveloppe en un matériau métallique flexible disposée autour de la première enveloppe, la première et la deuxième enveloppe étant solidaires entre elles en rotation.

2. Rouleau selon la revendication précédente, **caractérisé en ce que** le matériau métallique flexible est en fibres tissées ou tressées.

3. Rouleau selon l'une des revendications précédentes, **caractérisé en ce que** le matériau polymère est en PTFE ou en polyéthylène.

4. Rouleau selon l'une des revendications précédentes, **caractérisé en ce que** la deuxième enveloppe est recouverte d'une chaussette en fibres.

5. Rouleau selon l'une des revendications précédentes, **caractérisé en ce qu'**il comprend une graisse entre la tige métallique préformée et la première enveloppe.

6. Dispositif de bombage de feuilles de verre en défilement entre un lit de rouleaux supérieurs et un lit de rouleaux inférieurs constituant un lit conformateur pinçant les feuilles lors de leur défilement, ledit lit conformateur étant disposé selon un trajet à profil courbe dans la direction du défilement des feuilles de verre, ledit lit conformateur comprenant au moins un rouleau dit du type tige/gaine de l'une des revendications précédentes.

7. Dispositif selon la revendication précédente, **caractérisé en ce que** la gaine est entraînée en rotation par un des côtés du rouleau et la tige est maintenue fixe par l'autre côté du rouleau.

8. Dispositif selon l'une des revendications précédentes de dispositif, **caractérisé en ce que** le lit conformateur comprend au moins une paire de rouleaux du type tige/gaine placés de part et d'autre des feuilles en défilement pour les pincer ensemble.

9. Dispositif selon l'une des revendications précédentes de dispositif, **caractérisé en ce qu'**il comprend trois paires juxtaposées de rouleaux, les axes des trois rouleaux supérieurs des trois paires n'étant pas alignés, et les axes des trois rouleaux inférieurs des trois paires n'étant pas alignés, de sorte que les feuilles sont déformées par leur passage entre les trois paires de rouleaux.

10. Dispositif selon l'une des revendications précédentes de dispositif, **caractérisé en ce que** au moins un rouleau du type tige/gaine est celui de l'une des revendications de rouleau précédentes.

11. Dispositif selon la revendication 9, **caractérisé en ce que** les deux rouleaux de l'une des paires, voire tous les rouleaux des trois paires, sont celui de l'une des revendications de rouleau précédentes.

12. Dispositif selon la revendication précédente, **caractérisé en ce que** l'entrainement en rotation est exercé par l'intermédiaire de la deuxième enveloppe.

13. Procédé de bombage de feuilles de verre par le dispositif ou rouleau de l'une des revendications précédentes.

## Patentansprüche

1. Walze zum Antreiben von Glasscheiben, die einen metallischen Schaft umfasst, der gemäß einem Profil, das in seiner Länge gebogen ist, vorgeformt ist, und eine biegsame Hülle, die um den Schaft drehen kann, wobei die Hülle einen ersten Mantel aus einem Polymermaterial und einen zweiten Mantel aus einem biegsamen metallischen Material, der um den ersten Mantel angeordnet ist, umfasst, wobei der erste und der zweite Mantel miteinander in Drehung fest verbunden sind.

2. Walze nach dem vorstehenden Anspruch, **dadurch gekennzeichnet, dass** das biegsame metallische Material aus gewebten oder geflochtenen Fasern besteht.

3. Walze nach einem der vorstehenden Ansprüche, **dadurch gekennzeichnet, dass** das Polymermaterial aus PTFE oder aus Polyethylen besteht.

4. Walze nach einem der vorstehenden Ansprüche, **dadurch gekennzeichnet, dass** der zweite Mantel mit einem Strumpf aus Fasern abgedeckt ist.

5. Walze nach einem der vorstehenden Ansprüche, **dadurch gekennzeichnet, dass** sie ein Fett zwischen dem vorgeformten metallischen Schaft und dem ersten Mantel umfasst.

6. Vorrichtung zum Biegen von Glasscheiben unter Ablaufen zwischen einem Bett aus oberen Walzen und einem Bett aus unteren Walzen, die ein Formungsbett bilden, das die Scheiben bei ihrem Ablaufen einklemmt, wobei das Formungsbett entlang einer Bahn mit Profil, das in die Richtung des Ablaufens der Glasscheiben gebogen ist, angeordnet ist, wobei das Formungsbett mindestens eine Walze, vom Typ Schaft/Hülle genannt, eines der vorstehenden Ansprüche umfasst.

7. Vorrichtung nach dem vorstehenden Anspruch, **dadurch gekennzeichnet, dass** die Hülse in Drehung von einer der Seiten der Walze angetrieben wird und der Schaft von der anderen Seite der Walze stationär gehalten wird.

8. Vorrichtung nach einem der vorstehenden Ansprüche, **dadurch gekennzeichnet, dass** das Formungsbett mindestens ein Paar von Walzen vom Typ Schaft/Hülse umfasst, die zu jeder Seite der ablaufenden Scheiben platziert sind, um sie zusammenzuklemmen.

9. Vorrichtung nach einem der vorstehenden Vorrichtungsansprüche, **dadurch gekennzeichnet, dass** sie drei nebeneinander liegende Paare von Walzen umfasst, wobei die Achsen der drei oberen Walzen der drei Paare nicht ausgerichtet sind und die Achsen der drei unteren Walzen der drei Paare nicht ausgerichtet sind, so dass die Scheiben durch ihr Durchgehen zwischen den drei Paaren von Walzen verformt werden.

10. Vorrichtung nach einem der vorstehenden Vorrichtungsansprüche, **dadurch gekennzeichnet, dass** mindestens eine Walze vom Typ Schaft/Hülse die eines der vorstehenden Walzenansprüche ist.

11. Vorrichtung nach Anspruch 9, **dadurch gekennzeichnet, dass** die zwei Walzen eines der Paare, ja sogar alle Walzen der drei Paare, die eines der vorstehenden Walzenansprüche sind.

12. Vorrichtung nach dem vorstehenden Anspruch, **dadurch gekennzeichnet, dass** das Antreiben in Drehung über den zweiten Mantel ausgeübt wird.

13. Verfahren zum Biegen von Glasscheiben durch die Vorrichtung oder Walze eines der vorstehenden Ansprüche.

## Claims

1. A roll for carrying along sheets of glass, comprising a metal rod preformed in a curved profile lengthwise and a flexible sheath that is able to rotate about the rod, said sheath comprising a first envelope made of a polymer material and a second envelope made of a flexible metal material disposed around the first envelope, the first and the second envelope rotating together as one.

2. The roll as claimed in the preceding claim, **characterized in that** the flexible metal material is made of woven or braided fibers.

3. The roll as claimed in either of the preceding claims, **characterized in that** the polymer material is made of PTFE or polyethylene.

4. The roll as claimed in one of the preceding claims, **characterized in that** the second envelope is covered by a sock of fibers.

5. The roll as claimed in one of the preceding claims, **characterized in that** it comprises a lubricant between the preformed metal rod and the first envelope.

6. A device for bending sheets of glass running between a bed of upper rolls and a bed of lower rolls forming a shaping bed that pinches the sheets as they run, said shaping bed being disposed in a path having a curved profile in the running direction of the sheets of glass, said shaping bed comprising at least one roll of what is known as the rod/sheath type of one of the preceding claims.

7. The device as claimed in the preceding claim, **characterized in that** the sheath is rotated by one of the sides of the roll and the rod is kept fixed by the other side of the roll.

8. The device as claimed in either of the preceding device claims, **characterized in that** the shaping bed comprises at least one pair of rolls of the rod/sheath type placed on either side of the running sheets in order to pinch them together.

9. The device as claimed in one of the preceding device claims, **characterized in that** it comprises three juxtaposed pairs of rolls, the axes of the three upper rolls of the three pairs not being aligned, and the axes of the three lower rolls of the three pairs not being aligned, such that the sheets are deformed as they pass between the three pairs of rolls.

10. The device as claimed in one of the preceding device claims, **characterized in that** at least one roll of the rod/sheath type is the roll of one of the preceding roll claims.

11. The device as claimed in claim 9, **characterized in that** the two rolls of one of the pairs, or even all of the rolls of the three pairs, are the roll of one of the preceding roll claims.

12. The device as claimed in the preceding claim, **characterized in that** rotation is carried out by way of the second envelope.

13. A method for bending sheets of glass by the device or roll of one of the preceding claims.
